# EUROPÄISCHE PATENTANMELDUNG

(11) **EP 2 995 442 A1**
(43) Veröffentlichungstag der Anmeldung: **16.03.2016**
(21) Anmeldenummer: 15181982.8
(22) Anmeldetag: 21.08.2015
(51) Int. Cl.: B29C 65/00, B29C 43/36, B30B 15/06, B29D 29/06

(54) **VULKANISIERPRESSE SOWIE VERFAHREN ZUM BETRIEB EINER VULKANISIERPRESSE**

(30) Priorität: 27.08.2014 DE 102014112296
(71) Anmelder: Nilos GmbH & Co. KG, 40721 Hilden (DE)
(72) Erfinder: ZILLER, Thomas Josef, 40699 Erkrath (DE)
(74) Vertreter: Bungartz Christophersen Partnerschaft mbB Patentanwälte

(57) **Zusammenfassung**

Vorgeschlagen wird eine Vulkanisierpresse sowie ein Verfahren zum Betrieb einer Vulkanisierpresse. Zunächst wird eine obere Druckplatte (2) zum Öffnen des Vulkanisierquerschnittes angehoben, und das Vulkanisiergut (5) zwischen dieser Platte (2) und einer unteren Druckplatte (1) angeordnet. Die obere Druckplatte (2) wird unter ausschließlicher Ausnutzung der summierten Gewichtskräfte aus dem Eigengewicht der oberen Druckplatte (2) und dem Gewicht von Lasten (L), die auf einer nach oben offenen Lastträgerfläche (10) der oberen Druckplatte (2) aufliegen, auf das Vulkanisiergut (5) abgesenkt. Während des anschließenden Vulkanisierprozesses wird die Druckbeaufschlagung des Vulkanisiergutes (5) ausschließlich durch die summierten Gewichtskräfte aufrechterhalten. Nach Abschluss des Vulkanisierprozesses wird die Druckplatte (2) wieder angehoben, und das Vulkanisiergut entnommen. Geschaffen wird so eine Vulkanisierpresse sowie ein Verfahren zum Betrieb einer Vulkanisierpresse, welche bzw. welches sich zum Einsatz auch unter technisch einfachen Rahmenbedingungen eignet, z. B. in einer abgelegenen Region, und ohne dass von den bedienenden Personen ein hohes Maß an technischem Knowhow erwartet werden kann.

## Beschreibung

Die Erfindung betrifft eine Vulkanisierpresse mit zwei übereinander angeordneten und unter Zwischenlage des Vulkanisiergutes aufeinander zu beweglichen Druckplatten. Die Erfindung betrifft ferner ein Verfahren zum Betrieb einer solchen Vulkanisierpresse.

Vulkanisierpressen sind z. B. aus der DE 26 01 297 C2 bekannt und werden unter anderem zur Verbindung von Förder- und Transportgurten aus einem Elastomermaterial, häufig mit zusätzlich darin eingebetteter Stahlseileinlage, verwendet. Solche Fördergurte werden z. B. im Bergbau zum Transport von schüttfähigen Materialien eingesetzt. Zur Verbindung zweier Gurtenden werden diese zunächst zueinander parallel ausgelegt, sodann in einen speziellen Verbindungsgummi eingebettet, und schließlich unter Anwendung von Druck und Temperatur vulkanisiert. Dies geschieht in einer Vulkanisierpresse, deren obere und untere Druckplatten die für die Vulkanisation notwendige Temperatur möglichst gleichmäßig in das Vulkanisiergut, also in die zu verbindenden Fördergurte, einbringen. Zudem muss der für den Vulkanisiervorgang erforderliche Flächendruck gewährleistet sein. Als Druckmedium wird daher häufig Hydraulik eingesetzt. Der Einsatz von Hydraulik als Druckmedium ist allerdings aufwendig, und führt zu hohen Anschaffungs- und Betriebskosten einer solchen Vulkanisierpresse. Außerdem ist zur Einstellung des für die Vulkanisation notwendigen Flächendrucks eine Regelung des Hydraulikdrucks erforderlich. Notwendig ist daher nicht nur eine ausreichend dimensionierte Hydraulik, sondern auch eine entsprechende technische Peripherie für die Steuerung der Hydraulik.

Vulkanisierpressen müssen bisweilen auch dort eingesetzt werden, wo ein fachlich sorgfältiger Betrieb und sorgfältige Wartung nicht ohne Weiteres und jederzeit gewährleistet sind. Dies kann z. B. ein Einsatz in einer abgelegenen Bergbauregion sein, wo weder die technischen Hilfsmittel noch das Knowhow für die sachgerechte Bedienung einer mit moderner hydraulischer Steuerung arbeitenden Vulkanisierpresse vorausgesetzt werden können.

Neben Vulkanisierpressen, die aufgrund des Gewichts und der Abmessungen nur ortsfest betreibbar sind, gibt es auch fahrbare Pressen. Eine mobile Presse für den Einsatz dort, wo Gurtförderer mit schweren Fördergurten als Transportmittel stationär oder verrückbar installiert sind, ist aus der DE 23 51 502 C bekannt. An einem Fahrzeug ist ein Hubgerüst bestehend aus oberen und unteren horizontalen Pressenholmen angebracht. An den Pressenholmen sind jeweils beheizbare Pressenplatten angebracht, wobei sich zwischen jedem Pressenholm und seiner Pressenplatte mehrere Krafterzeugungseinrichtungen befinden. Nur diese erzeugen die Presskraft, und nicht die beiden unabhängig voneinander höhenverstellbaren Pressenholme des Hubgerüsts.

Der Erfindung liegt die **Aufgabe** zugrunde, eine Vulkanisierpresse sowie ein Verfahren zum Betrieb einer solchen Vulkanisierpresse zu schaffen, welche bzw. welches sich auch für einen Einsatz unter technisch einfachen Rahmenbedingungen eignet, z. B. in einer abgelegenen Region, und ohne dass von den bedienenden Personen ein hohes technisches oder fachliches Knowhow erwartet werden kann.

Zur Lösung dieser Aufgabe wird eine Vulkanisierpresse mit den Merkmalen des Patentanspruchs 1, sowie ein Verfahren zum Betrieb einer Vulkanisierpresse mit den Merkmalen des Patentanspruchs 11 vorgeschlagen.

Bei der so vorgeschlagenen Vulkanisierpresse wird der für den Vulkanisierprozess erforderliche Flächendruck nicht mit Hilfe von technisch anspruchsvollen Hydraulikaggregaten erzeugt, sondern allein unter Nutzung der Schwerkraft und von Gewichtskräften. Gleichwohl werden überzeugende Vulkanisierergebnisse erzielt.

Die erfindungsgemäße Vulkanisierpresse ist mit übereinander angeordneten und unter Zwischenlage des Vulkanisiergutes aufeinander zu beweglich angeordneten unteren und oberen Druckplatten versehen, sowie mit einer Einrichtung zur Beheizung mindestens einer der Druckplatten während des Vulkanisierprozesses. Während die untere Druckplatte statisch fest angeordnet ist und auch bleibt, ist die obere Druckplatte anhebbar ausgebildet, und die Oberseite der oberen Druckplatte ist für das Auflegen von Gewichtslasten als eine nach oben offene Lastträgerfläche ausgebildet.

Die nach oben offene Lastträgerfläche dient als Unterlage, auf der sich, vorzugsweise erst nachdem die Vulkanisierpresse an ihrem Einsatzort aufgestellt wurde, geeignete Gewichtslasten auflegen lassen. Dies können am Einsatzort der Vulkanisierpresse ohnehin vorhandene oder vorgefundene Gegenstände sein, z. B. Betonfertigteile, Steine, schwere Metallblöcke oder Metallschrott. Insbesondere lassen sich, entweder direkt auf der nach oben offenen Lastträgerfläche oder auf bereits dort positionierten, festen Lasten, Behälter anordnen, die dann mit Wasser gefüllt werden.

Durch entsprechende Anordnung der festen Lasten bzw. der Wasserlast in den Behältern lässt sich die Verteilung der Gewichtslast über der Druckfläche einstellen, d. h. justieren. Die so einmal erzielte Einstellung wird dann für alle folgenden Vulkanisierarbeiten beibehalten, wodurch sich, ohne dass hierfür eine aufwendige Steuerungstechnik erforderlich wäre, reproduzierbare Ergebnisse erzielen lassen. Zudem lassen sich unbefriedigende Ergebnisse einfach korrigieren, indem die oben aufliegenden Gewichtslasten entweder reduziert oder erhöht werden. Die insoweit erforderlichen Schritte sind einfacher Natur, weshalb sich das Vulkanisierverfahren in besonderer Weise für den Einsatz unter technisch einfachen Rahmenbedingungen eignet, z. B. in einer abgelegenen Region, und ohne dass von den bedienenden Personen ein hohes technisches oder fachliches Knowhow erwartet werden kann.

Da der beim Vulkanisieren ausgeübte Druck ausschließlich auf Gewichtskräften beruht, ist für das Einlegen und spätere Herausnehmen des Vulkanisiergutes eine Trennung der beiden Druckplatten erforderlich. Zu diesem Zweck sind Hebemittel vorhanden. Bei einer im Wesentlichen rechteckigen Ausbildung der Druckplatten sollten diese Hebemittel im Bereich aller vier Ecken angeordnet sind.

Geeignete Hebemittel sind z. B. Hydraulikzylinder, wobei diese von einfacher, leicht bedienbarer Bauart sein können, da die Hydraulikzylinder nur die Funktion des Anhebens und Absenkens ausführen müssen. Dies ist bereits mit einfacher Hydraulik ohne nennenswerte Steuerungs- oder Regelungstechnik erreichbar.

Bei einer bevorzugten Ausgestaltung der Vulkanisierpresse sind zusätzlich Verriegelungsmittel vorhanden, mit denen die abgesenkte obere Druckplatte gegen die untere Druckplatte vertikal verriegelbar ist. Im Fall von rechteckigen Druckplatten sind die Verriegelungsmittel vorzugsweise im Bereich aller vier Ecken angeordnet. Als Verriegelungsmittel eignen sich z. B. Flaschenzüge, die nach dem schwerkraftbedingten Absenken der oberen Druckplatte zunächst angezogen, und dann in dieser Stellung gesperrt werden.

Mit einer weiteren Ausgestaltung wird vorgeschlagen, dass um die Lastträgerfläche herum ein Rahmen angeordnet ist. Einzelne Rahmenelemente des Rahmens können lösbar sein, um so das Auf- oder abladen von Gewichtslasten, z. B. mittels eines Gabelstaplers, zu vereinfachen. Durch den Rahmen wird ein ungewolltes seitliches Abrutschen der Gewichtslasten verhindert. Außerdem ist der Rahmen aufgrund seiner Geometrie ein nützliches Hilfsmittel für eine über der Lastträgerfläche gleichmäßige Lastenverteilung.

Mit einer weiteren Ausgestaltung wird vorgeschlagen, dass die Lastträgerfläche durch Stege in einzelne Fächer unterteilt ist, in die jeweils Gewichtslasten eingesetzt sind. Durch die Stege wird ein ungewolltes Verrutschen der Gewichtslasten verhindert. Außerdem ist die Unterteilung in einzelne Fächer ein nützliches Hilfsmittel für eine über der Lastträgerfläche gleichmäßige Lastenverteilung, oder für eine gezielte Einstellung des Flächendrucks.

Da bei der erfindungsgemäßen Vulkanisierpresse der Druck nicht durch z. B. hydraulische Mittel, sondern allein durch Gewichtskräfte erzielt wird, diese jedoch abhängig von der Ausrichtung zum Untergrund sind, ist im Betrieb eine horizontale Ausrichtung der Vulkanisierpresse von besonderer Wichtigkeit. Daher wird vorgeschlagen, dass die untere Druckplatte fest auf einem Grundrahmen angeordnet ist, der auf höhenverstellbaren Füßen abgestützt ist.

Weiterhin vorgeschlagen wird ein Verfahren zum Betrieb einer Vulkanisierpresse mit zwei übereinander angeordneten und unter Zwischenlage des Vulkanisiergutes aufeinander zu beweglichen Druckplatten, von denen mindestens eine Druckplatte mit einer Beheizungseinrichtung versehen ist. Das Verfahren zeichnet sich durch die Schritte aus:
Anheben nur der oberen Druckplatte zum Öffnen des Vulkanisierquerschnittes;
Anordnen des Vulkanisiergutes zwischen den Druckplatten;
Absenken der oberen Druckplatte auf das Vulkanisiergut unter ausschließlicher Ausnutzung der summierten Gewichtskräfte aus dem Eigengewicht der oberen Druckplatte und dem Gewicht von Lasten, die auf einer nach oben offenen Lastträgerfläche der oberen Druckplatte aufliegen;
Beginn des Vulkanisierprozesses unter Betätigung der Beheizungseinrichtung, wobei während dessen Dauer die Druckbeaufschlagung des Vulkanisiergutes ausschließlich durch die summierten Gewichtskräfte aufrechterhalten wird;
Nach Abschluss des Vulkanisierprozesses Anheben der oberen Druckplatte zum Öffnen des Vulkanisierquerschnittes, und Entnahme des Vulkanisiergutes.

Mit einer Ausgestaltung dieses Verfahrens wird vorgeschlagen, dass die obere Druckplatte spätestens zum Beginn des Vulkanisierprozesses vertikal gegen die untere Druckplatte verriegelt wird. Die Verriegelung kann z. B. durch Festsetzen eines Flaschenzuges erfolgen. Für einen über die Fläche gleichmäßigen Druck sollte die Verriegelung möglichst an allen vier Ecken der Vulkanisierpresse erfolgen.

Mit einer weiteren Ausgestaltung des Verfahrens wird vorgeschlagen, dass zum Einstellen der erforderlichen Gewichtslasten Wasser in Behälter gefüllt wird, die auf der Lastträgerfläche der oberen Druckplatte angeordnet sind.

Einzelheiten der Erfindung werden im Folgenden anhand der Zeichnungen erläutert. Darin zeigen:
- Fig. 1: in einer Seitenansicht eine Vulkanisierpresse mit bereits eingelegtem Vulkanisiergut, jedoch vor Beginn des Vulkanisierprozesses und
- Fig. 2: die Vulkanisierpresse während des Vulkanisierprozesses.

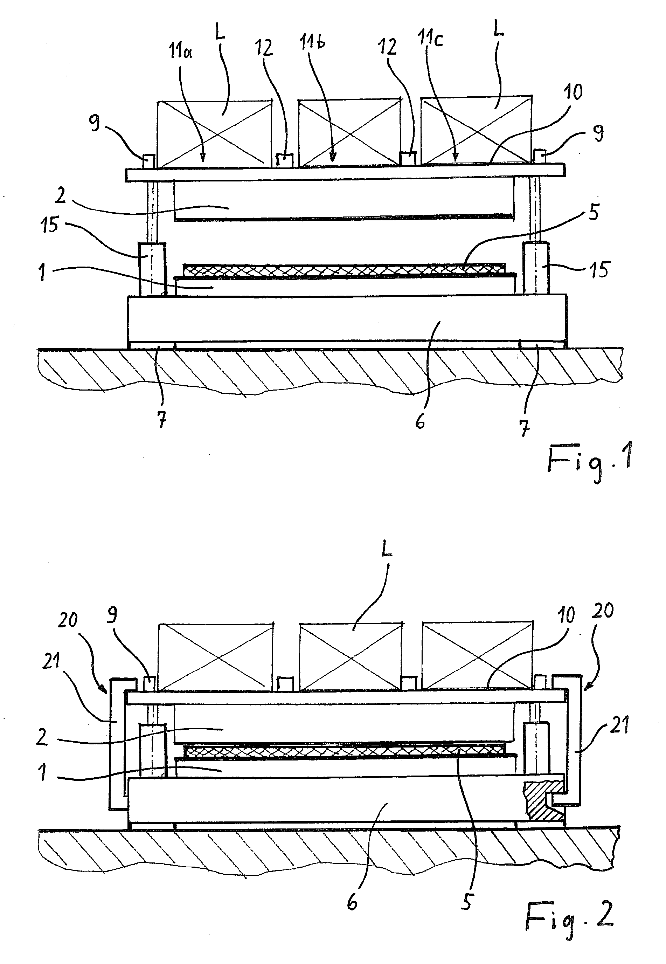

Die Fig. 1 zeigt die Vulkanisierpresse beim Einrichten, also noch vor dem eigentlichen Vulkanisierprozesses. Das Vulkanisiergut 5 liegt flächig auf einer unteren Druckplatte 1 auf, die mindestens die Größe des Vulkanisiergutes hat. Die Vulkanisierpresse eignet sich zum Beispiel für die Verbindung von Förder- und Transportgurten aus einem Elastomermaterial, häufig mit zusätzlich darin eingebetteter Stahlseileinlage. Solche Fördergurte werden vor allem im Bergbau zum Transport von schüttfähigen Materialien eingesetzt. Zur Verbindung zweier Gurtenden werden diese zunächst zueinander parallel ausgelegt, sodann in einen speziellen Verbindungsgummi eingebettet, und schließlich unter Anwendung von Druck und Temperatur für eine dauerhafte Verbindung vulkanisiert.

Die untere Druckplatte 1 ist fest auf einem Grundrahmen 6 der Vulkanisierpresse angeordnet. Durch vier jeweils höhenverstellbare Füße 7 ist es möglich, den Grundrahmen 6 und damit die Vulkanisierpresse exakt horizontal auszurichten.

Zur Erzielung eines von oben nach unten gerichteten Pressdrucks ist außerdem eine obere Druckplatte 2 vorhanden, die sich im Einrichtezustand (Fig. 1) über vier an den Ecken der Vulkanisierpresse angeordnete Hydraulikzylinder 15 gegenüber dem Grundrahmen 6 und damit gegenüber der unteren Druckplatte 1 abstützt. In diesem Zustand lässt sich das Vulkanisiergut 5, also die zu verbindenden Fördergurtenden, entweder in den Druckraum einlegen, oder daraus entnehmen.

Jede der Druckplatten 1, 2 ist mit einer Beheizungseinrichtung versehen, um an den Druckflächen die für den Vulkanisierprozess erforderliche Temperatur zu erzeugen. Diese Beheizungseinrichtungen werden üblicherweise elektrisch betrieben.

Oben auf der Druckplatte 2 ist eine nach oben offene, horizontale Lastträgerfläche 10 angeordnet. Um die Lastträgerfläche 10 herum ist daran ein Rahmen 9 befestigt. Der Rahmen 9 besteht vorzugsweise aus einzelnen Rahmenelementen, bei denen es sich z. B. um Profile handeln kann. Die Rahmenelemente sind demontierbar, um in diesem Bereich eine vollkommen glattflächige Lastträgerfläche ohne Barrieren oder Vorsprünge zu erzielen. Dies vereinfacht das Aufsetzen und ebenso das Entnehmen von Lasten, z. B. mittels eines Gabelstaplers.

Innerhalb des Rahmens 9 kann die Lastträgerfläche 10 durch Stege 12 in einzelne rechteckige Fächer 11a, 11 b, 11 c unterteilt sein. In die einzelnen Fächer 11a, 11 b, 11 c lassen sich, nachdem die Vulkanisierpresse an ihren Standort verbracht wurde, schwere Lasten L einsetzen, um so für den Vulkanisierprozess Gewichtskräfte zu erzielen, die deutlich über dem Eigengewicht der Druckplatte 2 liegen. Da die Lasten L erst an Ort und Stelle aufgeladen werden, ist die Vulkanisierpresse selbst von geringerem Gewicht, als eine herkömmliche, mit hydraulischem Pressdruck arbeitende Vulkanisierpresse. Das vergleichsweise geringe Eigengewicht vereinfacht den Transport der Vulkanisierpresse, etwa in eine abgelegene Bergbauregion.

Senkt sich nach Entsperrung bzw. Freigabe der als Hydraulikzylinder ausgebildeten Hebemittel 15 die obere Druckplatte 2 bis auf das Vulkanisiergut 5 ab (Fig. 2), lasten daher auf dem Vulkanisiergut 5 die summierten Gewichtskräfte aus dem Eigengewicht der oberen Druckplatte 2 und dem Gewicht der Lasten L, die auf der nach oben offenen Lastträgerfläche 10 abgelegt wurden.

Anstelle fester Lasten L oder zusätzlich zu diesen können auf der Lastträgerfläche 10 auch Behälter angeordnet sein, in die Wasser als Gewichtsmaterial gefüllt wurde. Durch entsprechende Verteilung der wasserbefüllten Behälter über die zur Verfügung stehende Lastträgerfläche 10 lässt sich die Druckverteilung relativ genau einstellen bzw. justieren.

Zudem lässt sich das Wasser ggf. gleichzeitig zur Kühlung benutzen.

Der besondere Vorteil der Vulkanisierpresse besteht in deren Einfachheit in Aufbau und Bedienung. Hydraulik kommt allenfalls in Gestalt der Hebemittel 15 zum Einsatz, jedoch nicht zur Druckerzeugung. Vielmehr wird der Pressdruck allein durch Gewichtskräfte erzielt. Durch entsprechende Verteilung der Lasten L ist die Flächenpressung über die Vulkanisierfläche einfach einstellbar.

Gemäß Fig. 2 ist ferner eine Verriegelung durch vertikale Verriegelungsmittel 20 vorgesehen, wobei diese Verriegelung dann zum Einsatz kommt, wenn spätestens zum Beginn des Vulkanisierprozesses die obere Druckplatte 2 infolge der Gewichtskräfte abgesenkt ist. Mit Zugeinrichtungen, die auch verstellbar sein können, werden die Druckplatten 1, 2 fest aneinandergebunden, ohne einen nennenswerten eigenen Druck zu erzeugen. Diese Maßnahme verhindert, dass beim Vulkanisierprozess die obere Druckplatte 2 durch das beim Vulkanisieren auftretende Ausgasen, verbunden mit einer Ausdehnung des Vulkanisiergutes, angehoben wird.

Zur Arretierung der Druckplatten 1, 2 während des Vulkanisiervorganges können Flaschenzüge an allen vier Ecken der Vulkanisierpresse angeordnet werden. Die Flaschenzüge werden nach dem vollständigen Absenken der oberen Druckplatte 2 angezogen, und dann gesperrt bzw. arretiert.

In Fig. 2 zeichnerisch dargestellt ist hingegen eine Variante, bei der die Druckplatten 1, 2 mittels als Verriegelungsmittel 20 dienenden Klammern 21 gegeneinander gesperrt werden.

Die Verriegelung wird aufgehoben, bevor nach Abschluss des Vulkanisierprozesses die obere Druckplatte 2 zum Öffnen des Vulkanisierquerschnittes wieder angehoben wird, bevor schließlich das Vulkanisiergut 5 entnommen wird.

Bei der hier beschriebenen Ausführungsform dienen als Hubmittel Hydraulikzylinder. Alternativ lässt sich das Anheben der durch die Lasten L beschwerten oberen Druckplatte 2 auch durch andere technische Maßnahmen erzielen, z. B. durch einen elektrischen Hubantrieb. Dieser kann von Vorteil sein, wenn wegen der elektrischen Beheizungseinrichtungen eine elektrische Stromversorgung ohnehin vorhanden ist.

### Bezugszeichenliste

- 1: untere Druckplatte
- 2: obere Druckplatte
- 5: Vulkanisiergut
- 6: Grundrahmen
- 7: höhenverstellbarer Fuß
- 9: Rahmen
- 10: Lastträgerfläche
- 11a: Fach
- 11b: Fach
- 11c: Fach
- 12: Steg
- 15: Hebemittel, Hydraulikzylinder
- 20: Verriegelungsmittel
- 21: Klammer

- L: Last

## Patentansprüche

1. Vulkanisierpresse mit übereinander angeordneten und unter Zwischenlage des Vulkanisiergutes (5) aufeinander zu beweglich angeordneten unteren (1) und oberen (2) Druckplatten, und einer Einrichtung zur Beheizung mindestens einer der Druckplatten (1, 2) während des Vulkanisierprozesses, wobei die untere Druckplatte (1) statisch fest angeordnet ist, die obere Druckplatte (2) mittels einer Hebeeinrichtung (12) anhebbar ausgebildet ist, und die Oberseite der oberen Druckplatte (2) für das Auflegen von Gewichtslasten als eine nach oben offene Lastträgerfläche (10) ausgebildet ist.

2. Vulkanisierpresse nach Anspruch 1, **dadurch gekennzeichnet, dass** die Druckplatten (1, 2) rechteckig ausgebildet sind, und dass die Hebemittel (15) im Bereich der vier Ecken angeordnet sind.

3. Vulkanisierpresse nach Anspruch 1 oder 2, **gekennzeichnet durch** Verriegelungsmittel (20), mit denen die obere Druckplatte (2) gegen die untere Druckplatte (1) vertikal verriegelbar ist.

4. Vulkanisierpresse nach Anspruch 3, **dadurch gekennzeichnet, dass** die Druckplatten (1, 2) rechteckig ausgebildet sind, und dass die Verriegelungsmittel (20) im Bereich der vier Ecken angeordnet sind.

5. Vulkanisierpresse nach Anspruch 4, **gekennzeichnet durch** sperrbare Flaschenzüge als Verriegelungsmittel (20).

6. Vulkanisierpresse nach einem der vorangehenden Ansprüche, **dadurch gekennzeichnet, dass** auf der Lastträgerfläche (10) mindestens ein Wasser als Gewichtsmaterial aufnehmender Behälter angeordnet ist.

7. Vulkanisierpresse nach einem der vorangehenden Ansprüche, **dadurch gekennzeichnet, dass** um die Lastträgerfläche (10) herum ein Rahmen (9) angeordnet ist.

8. Vulkanisierpresse nach Anspruch 7, **dadurch gekennzeichnet, dass** einzelne Rahmenelemente des Rahmens (9) lösbar ausgebildet sind.

9. Vulkanisierpresse nach einem der vorangehenden Ansprüche, **dadurch gekennzeichnet, dass** die Lastträgerfläche (10) durch Stege (12) in einzelne Fächer (11 a, 11 b, 11 c) unterteilt ist, in die jeweils Gewichtslasten (L) eingesetzt sind.

10. Vulkanisierpresse nach einem der vorangehenden Ansprüche, **dadurch gekennzeichnet, dass** die untere Druckplatte (1) auf einem Grundrahmen (6) angeordnet ist, der auf höhenverstellbaren Füßen (7) abgestützt ist.

11. Verfahren zum Betrieb einer Vulkanisierpresse mit zwei übereinander angeordneten und unter Zwischenlage des Vulkanisiergutes aufeinander zu beweglichen Druckplatten (1, 2), von denen mindestens eine Druckplatte (1, 2) mit einer Beheizungseinrichtung versehen ist, mit den Schritten:
Anheben nur der oberen Druckplatte (2) zum Öffnen des Vulkanisierquerschnittes;
Anordnen des Vulkanisiergutes (5) zwischen den Druckplatten;
Absenken der oberen Druckplatte (2) auf das Vulkanisiergut (5) unter ausschließlicher Ausnutzung der summierten Gewichtskräfte aus dem Eigengewicht der oberen Druckplatte (2) und dem Gewicht von Lasten (L), die auf einer nach oben offenen Lastträgerfläche (10) der oberen Druckplatte (2) aufliegen;
Beginn des Vulkanisierprozesses durch Betätigung der Beheizungseinrichtung, wobei während dessen Dauer die Druckbeaufschlagung des Vulkanisiergutes (5) ausschließlich durch die summierten Gewichtskräfte aufrechterhalten wird;
nach Abschluss des Vulkanisierprozesses Anheben der oberen Druckplatte (2) zum Öffnen des Vulkanisierquerschnittes, und Entnahme des Vulkanisiergutes (5).

12. Verfahren nach Anspruch 11, **dadurch gekennzeichnet, dass** die obere Druckplatte (2) spätestens zu Beginn des Vulkanisierprozesses vertikal gegen die untere Druckplatte (1) verriegelt wird.

13. Verfahren nach Anspruch 12, **dadurch gekennzeichnet, dass** die Verriegelung durch Festsetzen eines Flaschenzuges erfolgt, vorzugsweise an mindestens vier Punkten.

14. Verfahren nach einem der Ansprüche 11 - 13, **dadurch gekennzeichnet, dass** zum Einstellen der erforderlichen Lasten Wasser in Behälter gefüllt wird, die auf der nach oben offenen Lastträgerfläche (10) angeordnet sind.
